# EUROPÄISCHE PATENTSCHRIFT

(11) **EP 2 112 449 B1**
(45) Veröffentlichungstag und Bekanntmachung des Hinweises auf die Patenterteilung: **28.08.2013**
(21) Anmeldenummer: 09075143.9
(22) Anmeldetag: 27.03.2009
(51) Int. Cl.: F27B 3/18, F27D 13/00, F27D 17/00, C21C 5/52

(54) **Kontinuierliche Schrottzuführung in einen Elektrischen Schmelzofen (EAF)**
Continuous scrap supply in an electric arc furnace (EAF)
Introduction continue de ferraille dans un four électrique à arc (EAF)

(30) Priorität: 16.04.2008 DE 102008019868
(43) Veröffentlichungstag der Anmeldung: 28.10.2009
(73) Patentinhaber: SMS Siemag Aktiengesellschaft, 40237 Düsseldorf (DE)
(72) Erfinder: Falkenreck, Udo, 44797 Bochum (DE); Schlüter, Jochem, 44265 Dortmund (DE)
(74) Vertreter: Klüppel, Walter

(56) Entgegenhaltungen:
- WO-A-94/09332
- WO-A-2007/006558
- JP-A- 7 027 489
- US-A1- 2001 055 739
- VALLOMY J A ET AL: "CONTINUOUS STEELMAKING AT ORI MARTIN OF BRESCIA, ITALY" AISE STEEL TECHNOLOGY, AISE, PITTSBURG, PA, US, Bd. 77, Nr. 5, 1. Mai 2000 (2000-05-01), Seiten 35-39, XP000945937 ISSN: 0021-1559
- VALLOMY J A ET AL: "THE CONSTEEL PROCESS: AN INTEGRAL SCRAP PREHEATER FOR THE EAF" STEEL TIMES, FUEL & METALLURGICAL JOURNALS LTD. LONDON, GB, Bd. 221, Nr. 5, 1. Mai 1993 (1993-05-01), Seite 221,223, XP000365104 ISSN: 0039-095X

## Beschreibung

Die Erfindung betrifft eine kontinuierliche Schrottzuführung in einen Elektrischen Schmelzofen (EAF: electric arc furnace), wobei ein Kanal vorgesehen ist, der an einem Ende mit einer Öffnung in der Wand des Schmelzofens verbunden ist und an seinem anderen Ende eine Schrottaufgabe aufweist, sowie mit einer Absaugeinrichtung für die durch den Kanal geleiteten, zum Vorwärmen des Schrotts dienenden, Abgase aus dem Schmelzprozess, die zwischen den beiden Enden des Kanals an diesen angeschlossen ist.

Die kontinuierliche Schrottzuführung in einen Elektrolichtbogenofen ist beispielsweise aus der EP 744 585 B1, EP 190 313 B2, US 5400358 oder WO 2007/006558 A2 bekannt.

Die Größe der Schrottstücke auf dem Zuführband kann mit einer Kantenlänge von < 1,5m dabei sehr groß sein. Daraus lässt sich eine entsprechende Öffnung in der Seite des EAF von ca. 2 bis 4 m*m ableiten, die während des Schmelzens bei konventioneller Entstaubungstechnik in jedem Fall verschlossen werden müsste, da sonst ein zu hoher Falschlufteinfall in das Schmelzgefäß gelangen würde. Das Gebläse zur Absaugung der Prozessgase steht bei der kontinuierlichen Schrottzuführung heute typischerweise im Bereich der Schrottaufgabe, so dass die EAF Gase über eine große Strecke über den zugeführten Schrott gezogen werden.
Zur Reduktion des Falschlufteinfalls in den EAF und zur Steigerung der Effizienz der Entstaubung hat es in der Vergangenheit zwei Vorschläge gegeben:
1. Ein neben der Absaugung stehendes zweites Gebläse, dessen Leistung von dem Unterdruck in dem Schrott-Versorgungstunnel des EAF gesteuert wird oder
2. eine mechanische Sperre, die den Luftwiderstand am Eingang der Schrottaufgabe erhöhen soll.

Eine Regelung im Sinne der ersten Lösung ist sehr aufwändig und nur ungenügend zu überwachen. Darüber hinaus ist es sehr wartungsintensiv. Durch das doppelte Gebläse wird eine zusätzliche Menge an elektrischer Energie verbraucht.

Bei der zweiten Lösung werden Strömungswiderstände in den Schrottzuführtunnel eingebracht, die genau auf die Saugleistung und den Anfall an Prozessgasen dimensioniert werden müssen.

Bei beiden Lösungen wird das Ofengas (je nach Ausführung und Ofengröße) über eine Länge von 30 bis 50m abgesaugt, so dass es erkaltet ist und zur Unterdrückung der Emission von Furanen und Dioxinen über einen Stützbrenner wieder auf eine Temperatur von >700°C (Temp. ist Funktion der 0₂ Gehalte im Abgas) aufgewärmt werden muss.

Aufgabe der Erfindung ist es, über eine einstufige Absaugung die Abgase der Heiz-, Schmelz- und chemischen Reaktionen aus dem EAF sicher zu entfernen, ohne dass eine zu große Menge an Falschluft über den Schrottzuführtunnel einfällt und daher die Saugzugleistung unnötig vergrößert werden muss.

Gelöst wird diese Aufgabe erfindungsgemäß mit einer eine kontinuierliche Schrottzuführung in einen Elektrischen Schmelzofen (EAF), wobei ein Kanal vorgesehen ist, der an einem Ende mit einer Öffnung in der Wand des Schmelzofens verbunden ist und an seinem anderen Ende eine Schrottaufgabe aufweist, sowie mit einer Absaugeinrichtung für die durch den Kanal geleiteten, zum Vorwärmen des Schrotts dienenden, Abgase aus dem Schmelzprozess, die zwischen den beiden Enden des Kanals an diesen angeschlossen ist, die dadurch gekennzeichnet ist. dass sich die Absaugeinrichtung - bezogen auf die Gesamtlänge des Kanals - näher dem dem Schmelzofen zugewandten Ende des Kanals befindet, als dem der Schrottaufgabe zugewandten Ende.

Schrott und Abgase bewegen sich in dem Kanal in entgegengesetzter Richtung; während der Schrott in den Schmelzofen hineingefördert wird, wird das Abgas von dem Schmelzofen weg abgesaugt.

Die Absaugeinrichtung bzw. deren Schacht zum Absaugen der Abgase aus dem EAF, der mit einer kontinuierlichen Beschickung ausgeführt ist, wird an dem Kanal so platziert, dass die Absaugeinrichtung bzw. deren Schacht in der Nähe des Schmelzofens ist und die Distanz zur Aufgabeposition des Schrotts sowie der (möglichen) Zuschläge deutlich größer ist. Um den Strömungswiderstand im Bereich der Schrottaufgabe und damit die nutzbare Leistung der Absaugung bezogen auf den Lichtbogenofen zu erhöhen, können zudem bewegliche Klappen eingebracht werden.

Das Verhältnis Kanallänge zum EAF zur Kanallänge bis zur Schrottaufgabe könnte z. B. 1 zu 2 betragen.

Untersuchungen an bereits installierten EAFs mit kontinuierlicher Schrottbeschickung konnten zeigen, dass die Wärme einer merklichen Nachverbrennung der CO reichen Abgase nur lokal begrenzt auf den ersten Metern hinter dem Schmelzofen an den zugeführten Schrott abgegeben werden kann. Auch die sensible Wärme der Abgase können nur in diesem Bereich bedingt nutzbar gemacht werden.

Eine Plazierung des Ansaugstutzen als Funktion der Abgasmenge und der Leistung des EAF benötigt wegen der im Abgas befindlichen Restwärme keine oder nur eine begrenzte zusätzliche Energiemenge, die zur Einstellung der Abgastemperatur und damit zur Unterdrückung der Furane und Dioxine nötig ist.

Die Erfindung ergibt eine effiziente Lösung der Entstaubungsproblematik bei niedrigem Energieverbrauch im Falle der kontinuierlichen Schrottchargierung.

Die Erfindung soll nachfolgend an einem Ausführungsbeispiel erläutert werden.

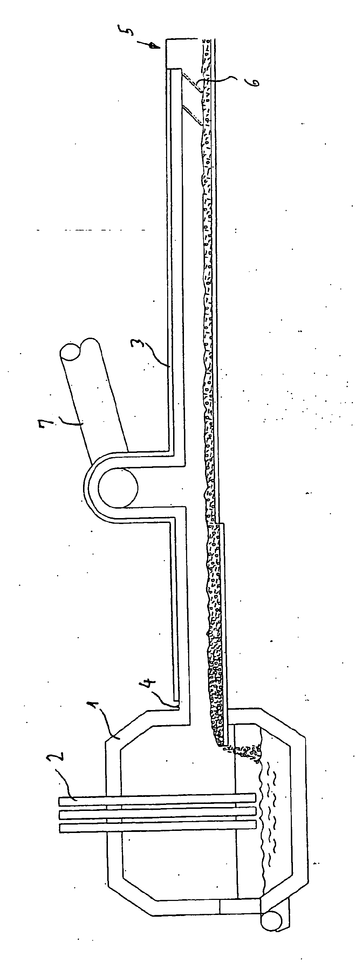

Dabei zeigt die Zeichnung einen schematischen Längsschnitt mit der Schrottzuführungs zu einem Elektrischen Schmelzofen (EAF).

Im Einzelnen sind in der Zeichnung der Schmelzofen mit 1 und die Elektroden mit 2 bezeichnet.

Für die kontinuierliche Schrottzuführung zum Schmelzofen ist ein Kanal 3 vorgesehen, der mit seinem einen Ende 4 bis zur Gefäßwand des Schmelzofens reicht. Am anderen - also gegenüberliegenden - Ende des Kanals befindet sich üblicherweise die Schrottaufgabe, die hier allerdings nicht dargestellt, sondern nur durch das Bezugszeichen 5 angedeutet ist.

Zur Reduzierung des Falschlufteintritts an diesem Ende des Kanals sind bewegliche Klappen 6 oder dgl. vorgesehen.

Die in dem Schmelzofen entstehenden Prozessgase werden durch eine an den Kanal 3 angeschlossene Absaugeinrichtung 7 abgesaugt, wobei der in der zwischen dem Schmelzofen und der Absaugeinrichtung befindlichen Strecke vorhandene Schrott durch die überströmenden Abgase vorgewärmt wird.

Für die Erfindung wesentlich ist, dass sich die Absaugeinrichtung - bezogen auf die Gesamtlänge des Kanals 3 - näher dem dem Schmelzofen 1 zugewandten Ende des Kanals befindet, als dem der Aufgabeeinrichtung 5 zugewandten Ende.

## Patentansprüche

1. Kontinuierliche Schrottzuführung in einen Elektrischen Schmelzofen (EAF),
wobei ein Kanal (3) vorgesehen ist, der an einem Ende (4) mit einer Öffnung in der Wand des Schmelzofens (1) verbunden ist und an seinem anderen Ende eine Aufgabeeinrichtung (5) für den Schrott aufweist, sowie mit einer Absaugeinrichtung (7) für die durch den Kanal (3) geleiteten, zum Vorwärmen des Schrotts dienenden, Abgase aus dem Schmelzprozess, die zwischen den beiden Enden des Kanals an diesen angeschlossen ist,
**dadurch gekennzeichnet,**
**dass** durch die Absaugeinrichtung (7) eine einstufige Absaugung der Abgase erfolgt, wobei
sich die Absaugeinrichtung (7) - bezogen auf die Gesamtlänge des Kanals (3) - näher an dem dem Schmelzofen (1) zugewandten Ende des Kanals (3) befindet, als an dem der Schrottaufgabe (5) zugewandten Ende.

2. Schrottzuführung nach Anspruch 1,
**dadurch gekennzeichnet,**
**dass** das Verhältnis der Länge des Kanals (3) von der Absaugeinrichtung (7) zum Schmelzofen (1) oder zur Aufgabeeinrichtung (5). 1 zu 2 beträgt.

3. Schrottzuführung nach einem der vorstehenden Ansprüche,
**dadurch gekennzeichnet,**
**dass** an dem der Aufgabeeinrichtung (5) zugewandten Ende des Kanals (3) in den freien Kanalquerschnitt ragende, bewegliche Klappen (6) vorgesehen sind.

## Claims

1. Continuous scrap feed in an electric smelting furnace (EAF), wherein a channel (3) is provided which is connected at one end (4) with an opening in the wall of the smelting furnace (1) and has at its other end a delivery opening (5) for the scrap, as well as with a suction device (7) for the waste gases, which are conducted through the channel (3) and serve for preheating the scrap, from the smelting process, the suction device being connected to the channel between the two ends thereof, **characterised in that** a single-stage suction of the waste gases takes place by way of the suction device (7), wherein the suction device (7) is disposed closer - referred to the overall length of the channel (3) - to the end of the channel (3) facing the smelting furnace (1) than to the end facing the scrap delivery (5).

2. Scrap feed according to claim 1, **characterised in that** the ratio of the length of the channel (3) from the suction device (7) to the smelting furnace 1) or to the delivery device (5) is 1 to 2.

3. Scrap feed according to one of the preceding claims, **characterised in that** movable flaps (6) protruding into the free channel cross-section are provided at the end of the channel (3) facing the delivery device.

## Revendications

1. Approvisionnement en riblons en continu dans un four à arc électrique (EAF), dans lequel on prévoit un canal (3) qui est relié, à une de ses extrémités (4), à une ouverture dans la paroi du four à arc électrique (1), et qui présente, à son autre extrémité, un mécanisme d'alimentation (5) pour les riblons, et qui comprend un mécanisme d'aspiration (7) pour les gaz d'échappement émanant du processus de mise en fusion, qui servent à préchauffer les riblons et qui sont guidés à travers le canal (3), ledit mécanisme étant raccordé au canal entre les deux extrémités de celui-ci, **caractérisé en ce qu'**on obtient une aspiration directe des gaz d'échappement via le mécanisme d'aspiration (7), le mécanisme d'aspiration (7) se trouvant - rapporté à la longueur totale du canal (3) - plus près de l'extrémité du canal (3) tournée vers le four à arc électrique (1) que de l'extrémité tournée vers l'alimentation des riblons (5).

2. Approvisionnement en riblons selon la revendication 1, **caractérisé en ce que** le rapport de la longueur du canal (3) depuis le mécanisme d'aspiration (7) jusqu'au four à arc électrique (1) ou jusqu'au mécanisme d'alimentation (5) s'élève de 1 à 2.

3. Approvisionnement en riblons selon l'une quelconque des revendications précédentes, **caractérisé en ce qu'**on prévoit, à l'extrémité du canal (3) tournée vers le mécanisme d'alimentation (5), des clapets mobiles (6) qui font saillie dans la section transversale libre du canal.
